# EUROPÄISCHE PATENTSCHRIFT

(11) **EP 0 678 623 B1**
(45) Veröffentlichungstag und Bekanntmachung des Hinweises auf die Patenterteilung: **24.06.1998**
(21) Anmeldenummer: 95102800.0
(22) Anmeldetag: 27.02.1995
(51) Int. Cl.: E01C 19/48

(54) **Strassenfertiger**
Roadpaver
Finisseur

(30) Priorität: 21.04.1994 DE 9406683 U
(43) Veröffentlichungstag der Anmeldung: 25.10.1995
(73) Patentinhaber: Joseph Vögele AG, D-68146 Mannheim (DE)
(72) Erfinder: Ulrich, Alfred Dr.-Ing., D-69517 Gorxheimertal (DE)
(74) Vertreter: Grünecker, Kinkeldey, Stockmair & Schwanhäusser Anwaltssozietät

(56) Entgegenhaltungen:
- EP-A- 0 217 408
- BE-A- 665 365
- DE-A- 2 856 583
- FR-A- 2 666 104

## Beschreibung

Die Erfindung betrifft einen Straßenfertiger der im Oberbegriff des Patentanspruchs 1 angegebenen Art (siehe EP-A-0 217 408).

Bei Arbeitsfahrt eines Straßenfertigers baut die hinten geschleppte Einbaubohle das aus dem Gutbunker nach hinten geförderte und vor der Einbaubohle abgelegte und ausgebreitete Gut zu einer ebenen, glatten und verdichteten Straßendeckenschicht ein. Der Straßenfertiger fährt dabei mit niedriger Geschwindigkeit (nur wenige Meter pro Minute). Die Hubeinrichtung ist passiv, d.h. die Einbaubohle befindet sich in einer Schwimmstellung, in der sie - auf der Deckenschicht aufliegend - Relativbewegungen gegenüber dem Chassis des Straßenfertigers ausführt. Der Transport des Straßenfertigers zu einer anderen Baustelle wird meist mittels eines Tiefladers durchgeführt. Die Einbaubohle wird dazu mit der Hubeinrichtung angehoben und in der Transportstellung festgelegt. Auf dem Tieflader kann die Einbaubohle sogar auf Unterlagen abgesetzt werden. Kleinere TransportEntfernungen, z.B. beim Ausbessern von Straßenschäden, legt der Straßenfertiger mit Transportgeschwindigkeiten bis zu 25 km/h oder mehr selbstfahrend zurück. Üblicherweise ist die Einbaubohle in der Transportlage nicht nur von der Hubeinrichtung angehoben gehalten, sondern auf starre Anschläge abgesetzt, über die die Schwingbewegungen der Einbaubohle ungefiltert und ungemindert auf das Chassis des Straßenfertigers übertragen werden. Die Einbaubohle regt wegen ihres hohen Gewichtes und ihres relativ weit hinter dem Chassis liegenden Massenschwerpunktes den Straßenfertiger zu den Fahrer belästigenden oder kritischen Nickbewegungen an bzw. verstärkt dessen Nickbewegungen. In Extremfällen wird sogar die Fahrsicherheit bei Transportfahrt gefährdet.

Der Erfindung liegt die Aufgabe zugrunde, einen Straßenfertiger der eingangs genannten Art zu schaffen, bei dem der störende Einfluß der Einbaubohle bei Transportfahrt gemindert oder weitgehend beseitigt ist.

Die gestellte Aufgabe wird erfindungsgemäß mit den im Patentanspruch 1 enthaltenen Merkmalen gelöst.

Bei dieser Ausbildung werden die Senkbewegungen der Einbaubohle, die sich aus Fahrbahnunebenheiten ergeben, nicht unmittelbar auf das Chassis des Straßenfertigers übertragen, sondern über die zugeschaltete Abstützvorrichtung gemindert und gedämpft, so daß die Nickbewegungs-Tendenz des Straßenfertigers bei Transportfahrt vermindert ist. Die Masse der Einbaubohle wirkt im Zusammenspiel mit der elastischen Abstützvorrichtung, die eine Art Feder-Dämpfer-Element in der kinematischen Kette zwischen dem Chassis und der Einbaubohle darstellt, als dynamischer Schwingungsabsorber mit der Einbaubohle als Tilger- oder Absorbermasse. Es entsteht im Prinzip ein Resonanzsystem, das auf der schwingenden Struktur des Straßenfertigers angebracht ist und den ursprünglichen, und durch Fahrbahnunebenheiten entstehenden Schwingungen des Straßenfertigers, d.h. auch des Chassis und des Gutbunkers, entgegenwirkt. Zweckmäßigerweise sind die Absorber- oder Tilgermasse und die elastische Abstützvorrichtung derart auf das Gesamtsystem des Straßenfertigers abgestimmt, daß sich ein zwischen Null und Unendlich liegender Dämpfungsgrad einstellt, bei dem das Hauptsystem die kleinsten Schwingungen ausführt. Der für den Straßenfertiger optimale Dämpfungsgrad läßt sich individuell und einfach ermitteln und ist eine Funktion des Massenverhältnisses zwischen der Tilgermasse und der Hauptmasse des Straßenfertigers. Die Nickbewegungen des Straßenfertigers lassen sich so erheblich verringern, wobei die Masse der Einbaubohle relativ zur Masse des Straßenfertigers in schwingende Bewegungen gerät.

Es ist zwar aus DE-C-28 56 583 bekannt, bei einem Schlepper mit Dreipunkt-Anbauvorrichtung für ein Heckund/oder Frontanbaugerät am Oberlenker und am Unterlenker der Dreipunkt-Anbauvorrichtung jeweils einen Schwingungstilger vorzusehen und die beiden Schwingungstilger auf die Resonanzen der Nick- und Hubschwingungen mit der Masse des Anbaugerätes als eine gemeinsame Tilgermasse wirken zu lassen. Jedoch sind bei einer Dreipunkt-Anbauvorrichtung mit Ober- und Unterlenkern und dem Anbaugerät nicht mit den Voraussetzungen bei einem Straßenfertiger vergleichbare Zustände anzutreffen, und werden bei dem Schlepper die Hebebewegungen und die Senkbewegungen in gleicher Weise zum Mindern der Schwingungen der Hauptmasse eingesetzt.

Bei der Ausführungsform gemäß Anspruch 2 kann durch die zusätzliche Dämpfung, die zweckmäßigerweise in der Abstützvorrichtung integriert ist, der Dämpfungsgrad optimal eingestellt werden, um bei Transportfahrt des Straßenfertigers die Nickschwingungen weitesgehend zu unterdrücken.

Eine bauliche einfache und funktionssichere Ausführungsform geht aus Anspruch 3 hervor. Der Druckspeicher fungiert im Steuerkreis als die elastische und zuschaltbare Abstützvorrichtung, die der Tilgermasse Schwingbewegungen gegenüber der Hauptmasse ermöglicht. Die Dämpfdrossel bewirkt durch Drosseln eine mechanische Dämpfung im Druckmittelstrom vom und zum Druckspeicher. Es wird Energie aufgezehrt und eine einfache und optimale Abstimmung des dynamischen Tilgersystems ermöglicht, weil sich die relativen Frequenzverhältnisse und der Dämpfungsgrad einstellen lassen. Dabei werden in dem dynamischen Tilgersystem die Senkbewegungen der Einbaubohle Berarbeitet, und die bei Senkbewegungen auftretenden Massenkräfte genutzt, d.h. Kräfte, die nach unten gerichtet sind und ihren Kraftwert verändern, nicht hingegen ihre Richtung. Dies ist ein wesentlicher Unterschied zu dem aus der DE-C-28 56 583 bekannten Absorptionssystem, das für jede Bewegungsrichtung einen eigenen Schwingungstilger vorsieht und diese kombinatorisch arbeiten läßt. Überraschend reichen bei einem Straßenfertiger allein die Senkbewegungen zum wirkungsvollen Ruhigstellen des Chassis aus.

Die Ausführungsform gemäß Anspruch 4 ist steuerungstechnisch einfach und zuverlässig. Es ist durchaus möglich, bereits im Betrieb gewesene Straßenfertiger nachträglich umzurüsten, und an die eine Arbeitsleitung wenigstens einen Druckspeicher über ein Schaltventil und eine Dämpfdrossel anzuschließen. Das Schaltventil wird zweckmäßigerweise nur dann in seine Durchgangsstellung geschaltet, wenn das Mehrwegeventil für die Hubeinrichtung in die Transport-Stützstellung verstellt ist, so daß das dynamische Tilgersystem bei Arbeitsfahrt des Straßenfertigers nicht wirksam wird.

Eine alternative, baulich einfache und robuste Ausführungsform geht aus Anspruch 5 hervor. Sobald die Hubeinrichtung die Einbaubohle in die Transportstellung angehoben hat, wird der Anschlagteil eingerückt, auf dem sich der Ausleger in Senkrichtung abzustützen vermag. Die Hubeinrichtung kann dann in die Schwimmstellung geschaltet werden.

Die Federeinrichtung kann in beliebiger Bauart sein, vorausgesetzt, sie erbringt direkt oder indirekt die erforderliche Dämpfung.

Die Ausführungsform gemäß Anspruch 6 stellt sicher, daß bei einem exzessiven Auschlag der Einbaubohle das dynamische Tilgersystem zumindest kurzzeitig überbrückt wird, ohne daß die Einbaubohle auf den Boden aufschlagen oder andere Teile des Straßenfertigers beschädigen könnte.

Baulich einfach ist die Ausführungsform gemäß Anspruch 7. Der Riegel läßt sich auf engstem Platz unterbringen und überträgt die Schwingbewegungen und die Massenkräfte über die Federeinrichtung auf das Chassis bzw. umgekehrt.

Die Ausführungsform gemäß Anspruch 8 hat den Vorteil, daß der Riegel bei Arbeitsfahrt des Straßenfertigers innerhalb des Chassis verborgen ist und nur dann nach außen verstellt wird, wenn er zur Schwingungstilgung benutzt wird. Die Massenkräfte im Bereich der Seitenwand des Chassis aufzunehmen, ist aus statischen Gesichtspunkten vorteilhaft.

Bei der Ausführungsform gemäß Anspruch 9 läßt sich das dynamische Tilgersystem bequem handhaben, weil der Riegel in der jeweiligen Bewegungsrichtung ferngesteuert verstellbar ist.

Eine alternative Ausführungsform geht aus Anspruch 10 hervor. Das Gehäuse überträgt die Massenkräfte auf das Chassis, und zwar zweckmäßigerweise auf die Rückwand des Chassis. Dadurch ergibt sich ein optimal großer Hebelarm zwischen der Anlenkstelle des Auslegers und der elastischen Abstützung. Die Handhabung ist bequem. Das Gehäuse braucht nur umgesteckt zu werden, sobald jeder Ausleger angehoben ist. Mittels des Kolbens ist eine saubere Bewegungs- und Kraftübertragung auf die Federeinrichtung gegeben.

Gemäß Anspruch 11 ist es zweckmäßig, den stationären Sicherheitsendanschlag zwischen dem Kolben und dem Gehäuse vorzusehen.

Bei den mechanischen dynamischen Tilgersystemen gemäß den Ansprüchen 5 bis 11 ist es vorteilhaft und von besonderer Bedeutung, daß die Schwingungstilgung weitgehend unabhängig bzw. flankierend zur Wirkung der Hubeinrichtung und nur innerhalb eines eingegrenzten Bereiches stattfindet, nämlich dann, wenn die Hubeinrichtung nicht mehr wirkt und nur so weit, bis die Ausleger auf den stationären Anschlägen abgefangen werden. Das dynamische Tilgersystem mit seinem eingegrenzten Wirkungsbereich hat bei einem Straßenfertiger den Vorteil, Schäden aufgrund des Zusammenspiels zwischen der sehr großen Masse der Einbaubohle und der noch größeren Hauptmasse des Straßenfertigers vorzubeugen, die bei extremen Konditionen durch ein sozusagen unbegrenzt wirkendes dynamisches Tilgersystem zu befürchten wären.

Andererseits reicht der begrenzte Wirkungsbereich des Tilgersystems aus, die größten Nickbewegungen zu unterdrücken bzw. die Nickbewegungen im Entstehen so zu stören, daß eine Resonanzwirkung unterdrückt wird. Dazu kommt, daß das dynamische Tilgersystem an die ohnedies bei einem Straßenfertiger schon gegebenen baulichen Voraussetzungen eng angepaßt ist und keine komplizierten konstruktiven Modifikationen benötigt.

Die Ausführungsform gemäß Anspruch 12 ermöglicht die individuelle Anpassung an die jeweils gegebenen baulichen Voraussetzungen, wobei durch die Veränderung der Vorspannung oder Federsteifigkeit und/oder der Dämpfung die straßenfertiger-typspezifischen Schwingungen gut beherrschbar sind.

Eine weitere alternative Ausführungsform geht aus Anspruch 13 hervor. Hier wird ein einfacher Reibungsdämpfer benutzt, um die Masse der Einbaubohle als Tilgermasse im dynamischen Tilgersystem wirksam werden zu lassen. Über die Reibung lassen sich große Energieanteile aufzehren. Gegebenenfalls werden speziell wirksame Reibungsoberflächen und Anstellwinkel der Reibungsdämpfer gewählt.

Anhand der Zeichnung werden Ausführungformen des Erfindungsgegenstandes erläutert. Es zeigen:
- Fig. 1: eine schematische Seitenansicht eines Straßenfertigers in Transportfahrt,
- Fig. 2A: ein den Straßenfertiger von Fig. 1 symbolisch darstellendes Ersatzsystem,
- Fig. 2B: eine Detailvariante zu den Fig. 1 und 2,
- Fig. 3A: ein Ersatzsystem einer anderen Ausführungsform,
- Fig. 3B,C: konstruktive Ausführungsformen zu Fig. 3A,
- Fig. 4A: das Ersatzsystem einer weiteren Ausführungsform,
- Fig. 4B: eine konstruktive Lösung zum Ersatzsystem von Fig. 4A, und
- Fig. 5 + 6: einander zugeordnete Ansichten einer weiteren Ausführungsform mit einem Reibungsdämpfer.

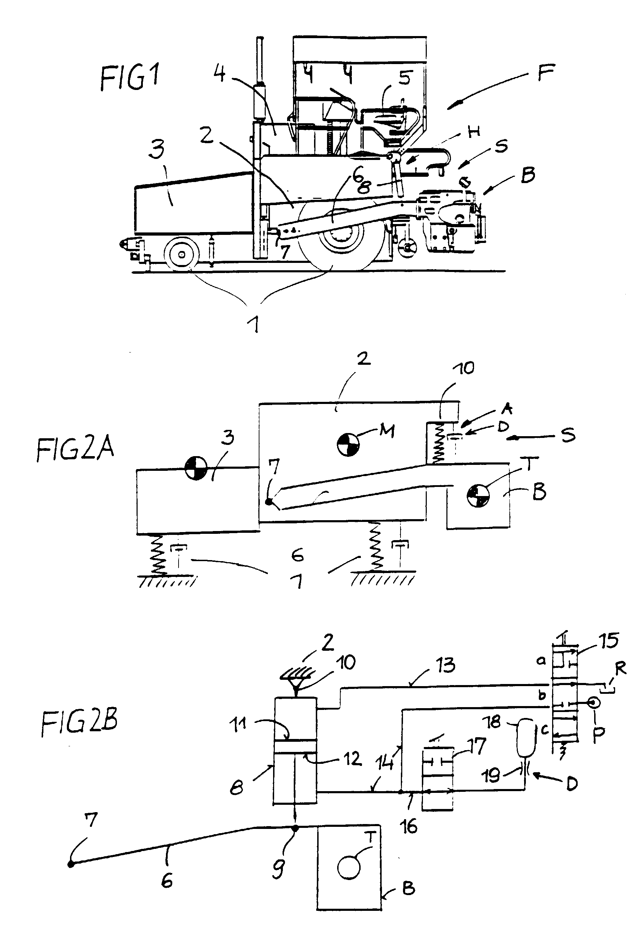

Ein Straßenfertiger F weist ein Fahrwerk 1 (Reifenfahrwerk oder Raupenfahrwerk) an einem Chassis 2 auf, das vorne einen Gutbunker 3 trägt, und in dem ein Primärantriebsaggregat 4 sowie nicht gezeigte Sekundäraggregate und in einem Führerstand ein Fahrersitz 5 vorgesehen sind. Der Straßenfertiger F schleppt hinten eine Einbaubohle B, die über zwei seitliche Ausleger 6 bei 7 am Chassis 2 angelenkt sind. Eine Hubvorrichtung H, z.B. mit hydraulischen Hubzylindern 8, dient zum Anheben der Einbaubohle B in die in Fig. 1 gezeigte Transportlage, in der die Einbaubohle B vom Boden abgehoben und abgestützt ist.

Fig. 2A ist ein Ersatzsystem zum Straßenfertiger F gemäß Fig. 1. Die Massen des Gutbunkers 3 und des Chassis 2 sind in ihren jeweiligen Massenschwerpunkten und als blockförmige Rechtecke versinnbildlicht. Die Hauptmasse des Straßenfertigers liegt in M. Das Fahrwerk 1 bewirkt auch ohne spezielle Aufhängungs- oder Federungssysteme, z.B. durch die Dämpfungscharakteristika der Reifen des Reifenfahrwerks, eine federnde Abdämpfung auf dem Boden. Die Einbaubohle B, die als kreisförmige Tilgermasse in ihrem Massenschwerpunkt versinnbildlicht ist, hängt mit den Auslegern 6 an einer zuschaltbaren, elastischen Abstützung A und an einem stationären Widerlager 10 des Chassis 2, wobei die elastische Abstützung A eine Federeinrichtung und eine Dämpfungsvorrichtung enthält, die mit der Tilgermasse T ein dynamisches Tilgersystem für hauptsächlich in Senkrichtung auftretende Relativbewegungen zwischen der Einbaubohle B und dem Chassis 2 wirkt und die Nickbewegungen des Straßenfertigers F gering hält.

In Fig. 2B ist die elastische, zuschaltbare Abstützvorrichtung A des dynamischen Tilgersystems in einem Blockschaltbild gezeigt. Jeder Hubzylinder 8 der Hubeinrichtung H weist eine Kolbensenkseite 11 und eine Kolbenhebeseite 12 auf, die hydraulische beaufschlagbar sind. Die Kolbenstange ist bei 9 am Ausleger angelenkt. Der Zylinder ist am Widerlager 10 des Chassis 2 abgehängt. Arbeitsleitungen 13, 14 verbinden den Hubzylinder 8 mit einem Mehrwegeventil 15, beispielsweise einem 4/3-Wegeventil mit Hand- oder Magnet- oder hydraulischer Betätigung, das zwischen drei Stellungen a, b und c umstellbar ist. An das Mehrwegesteuerventil 15 sind eine Druckquelle P und ein Tank R angeschlossen. Von der Arbeitsleitung 14 zweigt eine Hilfsleitung 16 zu wenigstens einem Druckspeicher 18 ab, der die elastische Abstützvorrichtung A definiert und mittels eines in der Hilfsleitung 16 angeordneten Schaltventils 17 zuschaltbar ist. Zwischen dem Hubzylinder 8 und dem Druckspeicher 18 ist wenigstens eine Dämpfdrossel 19 als Dämpfung D angeordnet.

Das Mehrwegeventil 15 verbindet in der sogenannten Schwimm- oder Senkstellung a beide Arbeitsleitungen 13, 14 mit dem Tank. Die Druckquelle P ist abgesperrt. In der Transport- oder Abstützstellung b ist nur die Arbeitsleitung 13 mit dem Tank R verbunden; die Arbeitsleitung 14 ist hingegen abgesperrt. In der Hebestellung c ist die Arbeitsleitung 13 mit dem Tank R verbunden; die Druckquelle P ist an die Arbeitsleitung 14 angeschlossen. Das Schaltventil 17 ist zweckmäßigerweise so mit der Steuerung des Mehrwegeventils 15 verbunden, daß es ausschließlich in der Transport oder Abstützstellung b des Mehrwegeventils 15 auf Durchgang (wie gezeigt) schaltet. Bei einer Senkbewegung der Tilgermasse T wird von der Kolbensenkseite 12 Druckmittel in die Arbeitsdruckleitung 14 verdrängt, das durch das Schaltventil 17 und die Dämpfdrossel 19 in den Druckspeicher 18 gelangt, der diese Drucksteigerung unter Nachgeben aufnimmt. Gleichzeitig wird in der Dämpfdrossel 19 Energie aufgezehrt. Bei einer Hebebewegung der Tilgermasse T wird das Druckmittel aus dem Druckspeicher 18 durch die Dämpfdrossel 19 ausgedrückt. Die Kolbenhebeseite 12 verdrängt Druckmittel durch die Arbeitsdruckleitung 13 in den Tank. Aufgrund von Fahrbahnunebenheiten oder sonstiger äußerer Einflüsse entstehende relative Schwingungen zwischen der Hauptmasse M und der Tilgermasse T werden auf diese Weise zumindest teilweise abgedämpft und aufgezehrt.

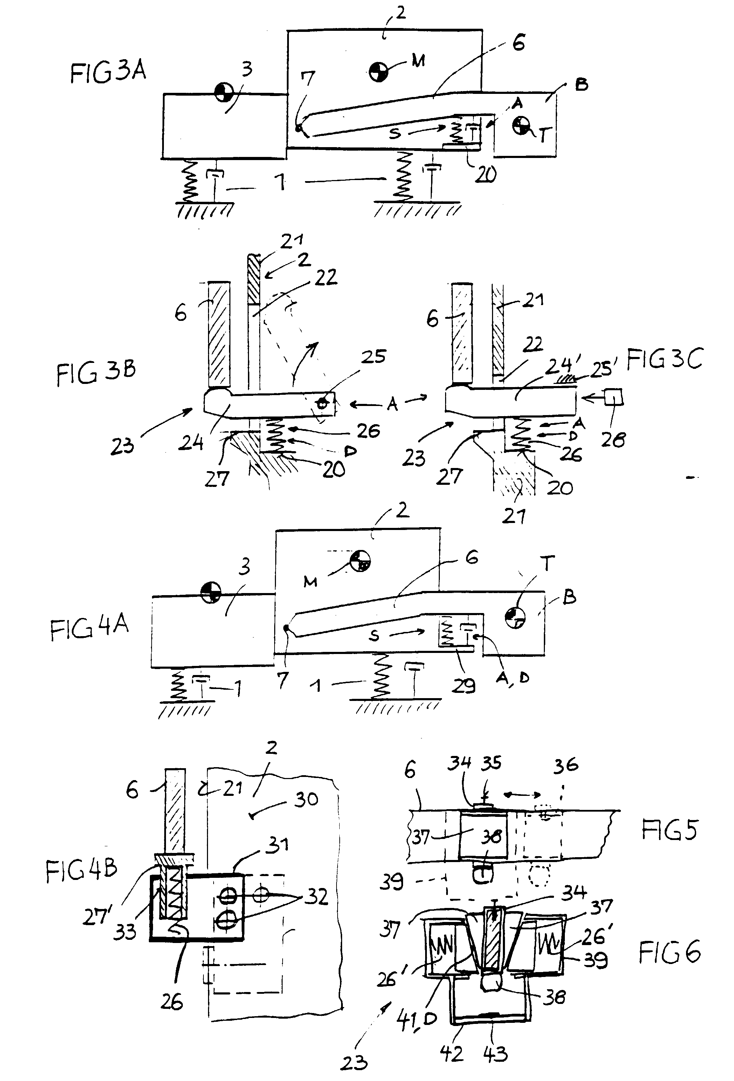

Fig. 3A stellt das Ersatzsystem für den Straßenfertiger dar, bei dem das dynamische Tilgersystem S mit der elastischen, zuschaltbaren Abstützung A zwischen einem unteren, stationären Auflager 20 des Chassis 2 und jedem Ausleger 6 angeordnet ist. Senkbewegungen der Tilgermasse T relativ zur Hauptmasse M bzw. Kippbewegungen der Hauptmasse M entgegen dem Uhrzeigersinn und relativ zur Tilgermasse T werden in der elastischen Abstützung aufgenommen und abgedämpft.

In einer ersten konstruktiven Ausbildung der elastischen Abstützung A gemäß Fig. 3B ist hinter eine Seitenwand 21 des Chassis 2 ein Anschlagteil 23, und zwar ein Riegel 24 schwenkbar bei 25 abgestützt. Der Riegel 24 läßt sich aus der in strichlierten Linien angedeuteten Passivstellung mittels eines nicht dargestellten Verstellantriebs durch eine Ausnehmung 22 der Seitenwand 21 unter den angehobenen Ausleger 6 schwenken. Der Riegel 24 stützt sich auf einer dämpfenden Federeinrichtung 26 ab, die ihrerseits auf dem Widerlager 20 aufsteht. Im Bewegungsweg des Riegels 24 unter der Belastung des Auslegers ist ein stationärer Endanschlag 27 vorgesehen, an dem der Riegel 24 unter Überbrücken der Federeinrichtung 26 abfangbar ist.

Bei der Ausführungsform gemäß Fig. 3C ist der Anschlagteil 23 ein linear verschiebbarer Riegel 24', der durch die Aussparung 22 der Seitenwand 21 unter den Ausleger 6 schiebbar ist und an einer Abstützung 25' einerseits und auf der Federeinrichtung 26 andererseits abstützbar ist. Eine mechanische, hydraulische, pneumatische oder elektrische Verstellvorrichtung 28 dient zum Ein- und Ausschieben des Riegels 24'. Im Bewegungsweg des Riegels 24' unter der Auflast des Auslegers ist ferner ein stationärer Endanschlag 27 vorgesehen.

Fig. 4A ist das Ersatzsystem einer anderen Ausführungsform des Fertigers, bei der die zuschaltbare elastische Abstützvorrichtung A zwischen einem Widerlager 29 an der Rückseite des Chassis 2 an der Unterseite des Auslegers 6 vorgesehen ist. Eine konstruktive Ausbildung dieser Abstützvorrichtung A ist in Fig. 4B im Schnitt gezeigt. An einer an die Seitenwand 21 angrenzenden Rückwand 30 des Chassis 2 ist als Anschlagteil 23 ein Gehäuse 31 in Verankerungsstellen 32 derart umsteckbar, daß es in der Passivstellung (strichliert angedeutet) außerhalb des Bewegungswegs des Auslegers und in der in ausgezogenen Linien gezeigten Transportstellung im Bewegungsweg des Auslegers 6 liegt. Im Gehäuse 31 ist die Federeinrichtung 26 abgestützt, auf der der Ausleger 6 über einen vertikal verschiebbaren Kolben 33 aufliegt. Ein stationärer Endanschlag wird zwischen der Oberseite des Gehäuses 31 und einem Bund 27' des Kolbens 33 hergestellt, sobald die Federeinrichtung 26 entsprechend weit zusammengedrückt ist.

In den Fig. 5 und 6 ist ein Reibungsdämpfer als elastische Abstützung A für den Ausleger 6 gezeigt. Auf dem Ausleger 6 ist beispielsweise eine Hülse 34 aus der Transportstellung in eine strichliert dargestellte Passivstellung verschiebbar. In beiden Stellungen wird die Hülse 34 mittels einer Verriegelung 35, 36 positioniert. An der Hülse 34 sind an beiden Seiten Reibblöcke 37 mit nach unten konvergierenden Reibflächen 41 befestigt, die in der Transportstellung zwischen Reibblöcke 40 mit ebenfalls schrägen Reibflächen 41 eintauchen. Die Reibblöcke 40 sind in Querführungen gegen Federeinrichtungen 26' verschiebbar. An der Unterseite der Hülse 34 ist ein Endanschlag, z.B.ein elastischer Puffer 38, angebracht, der auf eine Gegenfläche 43 eines Widerlagers 42 aufsetzbar ist. In der strichlierten Passivstellung reicht der dem Ausleger 6 mögliche Hubweg nach unten für die normalen Arbeitsbewegungen der Einbaubohle B aus.

Bei den Ausführungsformen der Fig. 3A bis 6 ist zweckmäßigerweise in der Transport lage der Einbaubohle B die Hubeinrichtung hydraulisch entkoppelt, d.h. sind die Hubzylinder 8 durch das Mehrwegeventil 15 in der Schwimmstellung, damit das mechanische dynamische Tilgersystem S wirksam wird.

Das dynamische Tilgersystem ist im Prinzip ein Resonanzsystem, das den Nickschwingungen des Straßenfertigers entgegenwirkt, wobei die Einbaubohle B als Tilgermasse wirkt, wenn der Straßenfertiger zu Schwingungen angeregt wird. Die bisher unvermeidbaren, teilweise sehr kräftigen Nickbewegungen des Straßenfertigers werden spürbar reduziert, was vor allem den Fertigerführer auf seinem Sitz entlastet und die Fahrsicherheit erhöht.

## Patentansprüche

1. Straßenfertiger mit einem auf einem Fahrwerk (1) fahrbaren Chassis (2), das einen vorneliegenden Gutbunker (3), ein Primärantriebsaggregat (4) und eingegliederte Sekundäraggregate trägt, mit einer hinten geschleppten Einbaubohle (8), die über seitliche Ausleger (6,7) am Chassis angelenkt ist, und mit einer Hubeinrichtung (H) zwischen dem Chassis und dem Ausleger, mit der die Einbaubohle in eine vom Boden abgehobene Transportlage verstellbar ist, **dadurch gekennzeichnet**, daß der Straßenfertiger (F) ein dynamisches Tilgersystem (S) aufweist, das aus einer relativ zum Chassis (2) elastischen und zuschaltbaren, in Senkrichtung wirksamen Abstützvorrichtung (A) für die in die Transportlage verstellte Einbaubohle (B) und aus einer durch die Einbaubohle (B) gebildeten Tilgermasse (T) besteht.

2. Straßenfertiger nach Anspruch 1, **dadurch gekennzeichnet**, daß die Abstützvorrichtung (A) eine zusätzliche Dämpfung (D) enthält.

3. Straßenfertiger nach einem der Ansprüche 1 oder 2, **dadurch gekennzeichnet**, daß die Hubeinrichtung (H) hydraulische Hubzylinder (8) weist, die in einen hydraulischen Steuerkreis eingegliedert und in Hebestellungen hydraulisch abstützbar sind, daß als elastische Abstützung (A) wenigstens ein an den Steuerkreis anschließbarer Druckspeicher (18) vorgesehen ist, und daß zwischen dem Druckspeicher (18) und jedem Hubzylinder (8) wenigstens eine, vorzugsweise einstellbare, Dämpfdrossel (19) eingeschaltet ist.

4. Straßenfertiger nach den Ansprüchen 1 bis 3, **dadurch gekennzeichnet**, daß beide Kolbenseiten (11, 12) des Hubzylinders (8) über Arbeitsleitungen (13, 14) an ein Mehrwegeventil (15) angeschlossen sind, das zwischen einer Hubstellung (C) (Kolbenhebeseite (12) mit Druckquelle (P) und Kolbensenkseite (11) mit Tank (R) verbunden), einer Senk- oder Schwimmstellung (a) (Kolbenhebe und Kolbensenkseite (11, 12) mit Tank (R) verbunden), und einer Transport-Stützstellung (b) (Kolbenhebeseite (12) vom Tank (R) und der Druckquelle (P) getrennt, Kolbensenkseite (11) mit Tank (R) verbunden) umstellbar ist, und daß die von der Kolbenhebeseite (12) zum Mehrwegeventil (15) führende Arbeitsleitung (14) über eine Hilfsleitung (16) und ein in der Transport-Stützstellung (b) des Mehrwegeventils (25) in eine Durchgangsstellung schaltbares Schaltventil (17) mit dem Druckspeicher (18) verbindbar ist.

5. Straßenfertiger nach einem der Ansprüche 1 oder 2, **dadurch gekennzeichnet**, daß die Hubeinrichtung (H) hydraulische, in einen hydraulischen Steuerkreis eingegliederte Hubzylinder (8) und in der elastischen Abstützvorrichtung (A) einen in eine Transportstellung einrückbaren und relativ zu einem stationären Auflager (20) des Chassis (2) auf- und abbewegbaren, mechanischen Anschlagteil (23) für jeden Ausleger (6) aufweist, und daß zwischen dem Anschlagteil (23) und dem Auflager (20) oder/und zwischen dem Anschlagteil (23) und dem Ausleger (6) eine hydraulische, mechanische, pneumatische oder eine kombinierte Federeinrichtung (26, 26') mit hydraulischer, pneumatischer, mechanischer oder mit Reibungsdämpfung (D) angeordnet ist.

6. Straßenfertiger nach Anspruch 5, **dadurch gekennzeichnet**, daß im Bewegungsweg des Anschlagteils (23) unter der Auflast des Auslegers (6) ein stationärer Endanschlag (27, 27') vorgesehen ist.

7. Straßenfertiger nach Anspruch 5, **dadurch gekennzeichnet**, daß der Anschlagteil (23) ein unter den angehobenen Ausleger (6) schwenk oder linear durch Ausschieben verstellbarer Riegel (24, 24') ist, der zumindest in der unter den Ausleger (6) greifenden Transportstellung auf der Federeinrichtung (26) aufliegt.

8. Straßenfertiger nach Anspruch 7, **dadurch gekennzeichnet**, daß der Riegel (24, 24') durch eine Seitenwand (21) des Chassis (2) unter den angehobenen Ausleger (6) verstellbar ist.

9. Straßenfertiger nach den Ansprüchen 7 und 8, **dadurch gekennzeichnet**, daß eine mechanische, hydraulische, pneumatische oder elektrische Verstelleinrichtung (28) für den Riegel (24, 24') vorgesehen ist.

10. Straßenfertiger nach den Ansprüchen 5 und 6, **dadurch gekennzeichnet**, daß der Anschlagteil (23) ein an der Rückwand (30) des Chassis (2) zwischen einer Einbaustellung außerhalb des Bewegungsbereichs des Auslegers (6) und der Transportstel- lung im Bewegungsweg des Auslegers (6), umstellbares, vorzugsweise umsteckbares, Gehäuse (31) ist, daß die Federeinrichtung (26) im Gehäuse (31) untergebracht ist, und daß der Ausleger (6) in der Transportstellung des Gehäuses (31) auf die Federeinrichtung (26) auflegbar ist, vorzugsweise unter Zwischenschaltung eines von der Federeinrichtung (26) abgestützten Kolbens.

11. Straßenfertiger nach den Ansprüchen 6 und 10, **dadurch gekennzeichnet**, daß der stationäre Endanschlag (27') zwischen dem Kolben (33) und dem Gehäuse (31) angeordnet ist.

12. Straßenfertiger nach wenigstens einem der Ansprüche 5 bis 11, **dadurch gekennzeichnet**, daß die Federeinrichtung (26, 26') in ihrer Vorspannung und/oder Dämpfung verstellbar ist.

13. Straßenfertiger nach wenigstens einem der Ansprüche 1 bis 12, **dadurch gekennzeichnet**, daß die elastische Abstützung (A) einen nicht-selbsthemmenden Reibungsdämpfer (39) für den Ausleger (6) aufweist.

## Claims

1. A roadpaver comprising a chassis (2), which is movable on a travelling gear (1) and which carries a front stock hopper (3), a primary drive unit (4) and incorporated secondary drive units, a paving screed (B) which is dragged at the rear and which is articulated on said chassis via lateral outriggers (6, 7), and a lifting device (H) which is provided between said chassis and said outrigger and by means of which the paving screed can be moved to a transport position raised from the ground, **characterized in that** the roadpaver (F) is provided with a dynamic absorber system (S) comprising an actuable support (A) for the paving screed (B) occupying the transport position, said support (A) being elastic relative to the chassis (2) and effective in the lowering direction, as well as an absorber mass (T) defined by the paving screed (B).

2. A roadpaver according to claim 1, **characterized in that** the support (A) includes additional damping means (D).

3. A roadpaver according to one of the claims 1 or 2, **characterized in that** the lifting device (H) comprises hydraulic lift cylinders (8), which are incorporated in a hydraulic control circuit and which are adapted to be hydraulically supported at lift positions, that at least one accumulator (18), which is adapted to be connected to said control circuit, is provided as the elastic support (A), and that at least one, preferably adjustable damping restrictor (19) is inserted between said accumulator (18) and each lift cylinder (8).

4. A roadpaver according to one of the claims 1 or 3, **characterized in that** both piston sides (11, 12) of the lift cylinder (8) are connected to a multi-way valve (15) via hydraulic lines (13, 14), said multi-way valve (15) being adapted to be changed over between a raised position (c) [the piston lifting side (12) is connected to the pressure source (P) and the piston lowering side (11) is connected to the tank (R)], a lowering or floating position (a) [the piston lifting and lowering sides (11, 12) are connected to the tank (R)], and a transport/supported position *(b)* [the piston lifting side (12) is separated from the tank (R) and from the pressure source (P), the piston lowering side (11) is connected to the tank (R)], and that the hydraulic line (14) leading from the piston lifting side (12) to the multi-way valve (15) is adapted to be connected to the accumulator (18) via an auxiliary line (16) and a control valve (17) which is adapted to be switched through at the transport/ supported position *(b)* of the multi-way valve (15).

5. A roadpaver according to one of the claims 1 or 2, **characterized in that** the lifting device (H) comprises hydraulic lift cylinders (8), which are incorporated in a hydraulic control circuit, and, in the elastic support (A), a mechanical stop member (23) for each outrigger (6), said stop member (23) being adapted to be displaced to a transport position and to be moved up and down relative to a stationary bearing (20) of the chassis (2), and that a hydraulic, mechanical, pneumatic or combined spring means (26, 26') with hydraulic, pneumatic, mechanical or frictional damping (D) is arranged between said stop member (23) and said bearing (20) or/and between said stop member (23) and said outrigger (6).

6. A roadpaver according to claim 5, **characterized in that** a stationary limit stop (27, 27') is provided in the path of movement followed by the stop member (23) under the load applied by the outrigger (6).

7. A roadpaver according to claim 5, **characterized in that** the stop member (23) is a locking member (24, 24'), which is adapted to be pivotably moved or linearly pushed to a position below the raised outrigger (6), said locking member (24, 24') resting on the spring means (26) at least at the transport position at which it extends below the outrigger (6).

8. A roadpaver according to claim 7, **characterized in that** the locking member (24, 24') is adapted to be moved to the position below the raised outrigger (6) through a side wall (21) of the chassis (2).

9. A roadpaver according to claims 7 and 8, **characterized in that** a mechanical, hydraulic, pneumatic or electrical adjusting device (28) for the locking member (24, 24') is provided.

10. A roadpaver according to claims 5 and 6, **characterized in that** the stop member (23) is a housing (31), which is adapted to be changed over at the back wall (30) of the chassis (2) between a first position associated with the operative condition of the roadpaver and located outside of the range of movement of the outrigger (6) and a second position associated with the transport condition of the roadpaver and located in the path of movement of the outrigger (6), said changing over being preferably effected by removing the housing (31) and by reattaching it at the repective other position, that the spring means (26) are accommodated in the housing (31), and that, at the transport position of the housing (31), the outrigger (6) is adapted to be placed on said spring means (26), preferably with use of an intermediate piston which is supported by said spring means (26).

11. A roadpaver according to claims 6 and 10, **characterized in that** the stationary limit stop (27') is arranged between the piston (33) and the housing (31).

12. A roadpaver according to at least one of the claims 5 to 11, **characterized in that** the spring means (26, 26') is adapted to be adjusted with respect to its preload and/or damping properties.

13. A roadpaver according to at least one of the claims 1 to 12, **characterized in that** the elastic support (A) is provided with a non-self-locking frictional damper (39) for the outrigger (6).

## Revendications

1. Finisseur comportant un châssis (2) qui peut être déplacé sur un mécanisme de déplacement (1) et porte un récipient de stockage (3) situé à l'avant, un groupe d'entraînement primaire (4) et des groupes secondaires intégrés, comportant une poutre lisseuse (8) traînée à l'arrière qui est articulée sur le châssis par l'intermédiaire de bras (6, 7) latéraux et comportant un dispositif de levage (H) entre le châssis et le bras, dispositif avec lequel la poutre lisseuse peut être amenée dans une position de transport soulevée du sol, **caractérisé** en ce que le finisseur (F) comporte un système d'amortissement (S) dynamique qui est constitué par un dispositif d'appui (A) élastique par rapport au châssis (2), pouvant être enclenché et agissant dans la direction verticale, pour la poutre lisseuse (B) amenée en position de transport et par une masse d'amortissement (T) formée par la poutre lisseuse (B).

2. Finisseur selon la revendication 1, **caractérisé** en ce que le dispositif d'appui (A) comprend un dispositif d'amortissement (D) supplémentaire.

3. Finisseur selon l'une des revendications 1 ou 2, **caractérisé** en ce que le dispositif de levage (H) comporte des vérins de levage (8) hydrauliques qui sont intégrés dans un circuit de commande hydraulique et sont supportés par des moyens hydrauliques dans des positions de levage, qu'au moins un accumulateur de pression (18) pouvant être raccordé au circuit de commande est prévu comme appui (A) élastique et qu'au moins une restriction d'amortissement (19), de préférence réglable, est montée entre l'accumulateur de pression (18) et chaque vérin de levage (8).

4. Finisseur selon les revendications 1 à 3, **caractérisé** en ce que les deux côtés de piston (11, 12) du vérin de levage (8) sont raccordés par des conduites de travail (13, 14) à une soupape à plusieurs voies (15) qui peut commuter entre une position de levage (c) (côté montée de piston (12) relié à la source de pression (P) et côté descente de piston (11) relié au réservoir (R)), une position de descente ou position flottante (a) (côtés montée et descente de piston (11, 12) reliés au réservoir (R)) et une position de support de transport (b) (côté montée de piston (12) séparé du réservoir (R) et de la source de pression (P), côté descente de piston (11) relié au réservoir (R)) et que la conduite de travail (14) menant du côté montée de piston (12) à la soupape à plusieurs voies (15) peut être reliée à l'accumulateur de pression (18) par l'intermédiaire d'une conduite auxiliaire (16) et une soupape de commutation (17) pouvant être commutée dans une position de passage dans la position de support de transport (b) de la soupape à plusieurs voies (15).

5. Finisseur selon l'une des revendications 1 ou 2, **caractérisé** en ce que le dispositif de levage (H) comporte des vérins de levage (8) hydrauliques intégrés dans un circuit de commande hydraulique et dans le dispositif d'appui (A) élastique, pour chaque bras (6), un élément de butée (23) mécanique pouvant être rentré dans une position de transport et pouvant être déplacé vers le haut et vers le bas par rapport à un support (20) stationnaire du châssis (2) et qu'un dispositif à ressort (26, 26') hydraulique, mécanique, pneumatique ou combiné est disposé entre l'élément de butée (23) et le support (20) ou/et entre l'élément de butée (23) et le bras (6) avec un dispositif d'amortissement (D) hydraulique, pneumatique, mécanique ou à friction.

6. Finisseur selon la revendication 5, **caractérisé** en ce qu'une butée terminale (27, 27') stationnaire est prévue dans le trajet de déplacement de l'élément de butée (23) sous la charge du bras (6).

7. Finisseur selon la revendication 5, **caractérisé** en ce que l'élément de butée (23) est un verrou (24, 24') qui peut pivoter ou être poussé linéairement sous le bras (6) soulevé et qui repose sur le dispositif à ressort (26) au moins dans la position de transport où il passe sous le bras (6).

8. Finisseur selon la revendication 7, **caractérisé** en ce que le verrou (24, 24') peut être déplacé sous le bras (6) soulevé à travers une paroi latérale (21) du châssis (2).

9. Finisseur selon les revendications 7 et 8, **caractérisé** en ce qu'un dispositif de réglage (28) mécanique, hydraulique, pneumatique ou électrique est prévu pour le verrou (24, 24').

10. Finisseur selon les revendications 5 et 6, **caractérisé** en ce que l'élément de butée (23) est un boîtier (31) sur la paroi arrière (30) du châssis (2) qui peut être déplacé, de préférence démonté, entre une position de montage à l'extérieur de la zone de déplacement du bras (6) et la position de transport dans le trajet de déplacement du bras (6), que le dispositif à ressort (26) est logé dans le boîtier (31) et que le bras (6) peut, dans la position de transport du boîtier (31), reposer sur le dispositif à ressort (26), de préférence par l'intermédiaire d'un piston supporté par le dispositif à ressort (26).

11. Finisseur selon les revendications 6 et 10, **caractérisé** en ce que la butée terminale (27') stationnaire est disposée entre le piston (33) et le boîtier (31).

12. Finisseur selon au moins une des revendications 5 à 11, **caractérisé** en ce que la précharge et/ou l'amortissement du dispositif à ressort (26, 26') est réglable.

13. Finisseur selon au moins une des revendications 1 à 12, **caractérisé** en ce que l'appui (A) élastique comporte un amortisseur à friction (39) non autobloquant pour le bras (6).
